# EUROPÄISCHE PATENTSCHRIFT

(11) **EP 0 502 297 B1**
(45) Veröffentlichungstag und Bekanntmachung des Hinweises auf die Patenterteilung: **08.06.1994**
(21) Anmeldenummer: 92101065.8
(22) Anmeldetag: 23.01.1992
(51) Int. Cl.: A01D 45/30, A01D 45/00

(54) **Selbstfahrende Vorrichtung zum Ernten von empfindlichem Erntegut wie Rizinuskapseln**
Self-propelled harvester for harvesting delicate crops such as castor-oil seeds
Moissonneuse automotive pour la récolte de produits délicats tels que les graines de ricin

(30) Priorität: 01.03.1991 DE 4106475
(43) Veröffentlichungstag der Anmeldung: 09.09.1992
(73) Patentinhaber: CLAAS OHG, D-33426 Harsewinkel (DE); CENTRE NATIONAL DU MACHINISME AGRICOLE, DU GENIE RURAL, DES EAUX ET DES FORETS (CEMAGREF), F-92160 Antony (FR)
(72) Erfinder: Barbe, Paul, F-34160 Beaulieu (FR); Lyon, Claude, F-34170 Catelnau Le Lez (FR); Perret, François, F-34230 Paulhan (FR)
(74) Vertreter: Stiller, Leonhard, Dipl.-Ing.

(56) Entgegenhaltungen:
- EP-A- 0 450 290
- DE-A- 3 008 283
- DE-U- 8 600 471
- US-A- 3 736 734

## Beschreibung

Die Erfindung betrifft eine Vorrichtung zum Ernten von empfindlichem Erntegut wie Rizinuskapseln mittels Bürsten, welche frontseitig an einem selbstfahrenden Trägerfahrzeug antreibbar gelagert sind nach dem Oberbegriff des Anspruchs 1.

Um bei einer derartigen Vorrichtung problemlos auch Rizinuskapseln auf schonende Art ernten zu können, sind bei den nicht vorveröffentlichten DE-A-40 10 504 der Anmelderin die Bürsten zu mehreren Bürstenpaaren zusammengefaßt, wobei jede Bürste eine in Fahrtrichtung neigungsveränderbare Achse aufweist und jedem Bürstenpaar ein die Pflanzenstengel nach unten ziehendes gegenläufig angetriebenes Einzugswalzenpaar zugeordnet ist.

Eine derartige Vorrichtung arbeitet an sich zufriedenstellend. Es hat sich jedoch in der Praxis herausgestellt, daß durch schräg in Fahrtrichtung nach vorn geneigte Bürsten zunächst die oberen Spitzen der Rizinuspflanzen ergriffen werden, so daß zum Teil schon dadurch die darunterhängenden Rinzinuskapseln von der Pflanze abgeschüttelt werden, bevor sie von den Bürsten abgestreift werden können. Diese Kapseln werden von den Einzugswalzen zum Teil zerquetscht und fallen auf den Ackerboden. Derartige Kapselverluste zu vermeiden ist das Ziel vorliegender Erfindung. Dieses Ziel wird dadurch erreicht, daß oberhalb eines jeden Einzugswalzenpaares etwa parallel zu deren Längsachse und mit geringem Abstand von diesem ein antreibbares Bürstenbandpaar vorgesehen ist, deren Länge mindestens der Länge des Einzugswalzenpaares entspricht und die den Einzugswalzenspalt eines Einzugswalzenpaares abdeckt.

Weitere vorteilhafte Ausführungsformen der Erfindung sind in den Unteransprüchen näher definiert.

Im folgenden soll die Erfindung anhand eines Ausführungsbeispieles und mehrerer dieses schematisch darstellender Figuren näher erläutert werden. Dabei zeigt:

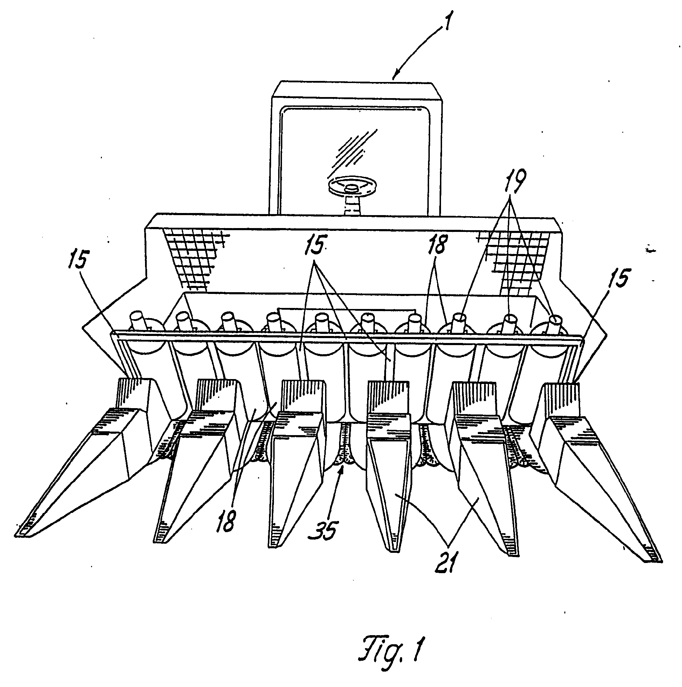

- Fig. 1: den vorderen Teil der erfindungsgemäßen Erntevorrichtung in perspektivischer Darstellung,
- Fig. 2: den erntewirksamen Teil der in Fig. 1 dargestellten Vorrichtung in der Seitenansicht,

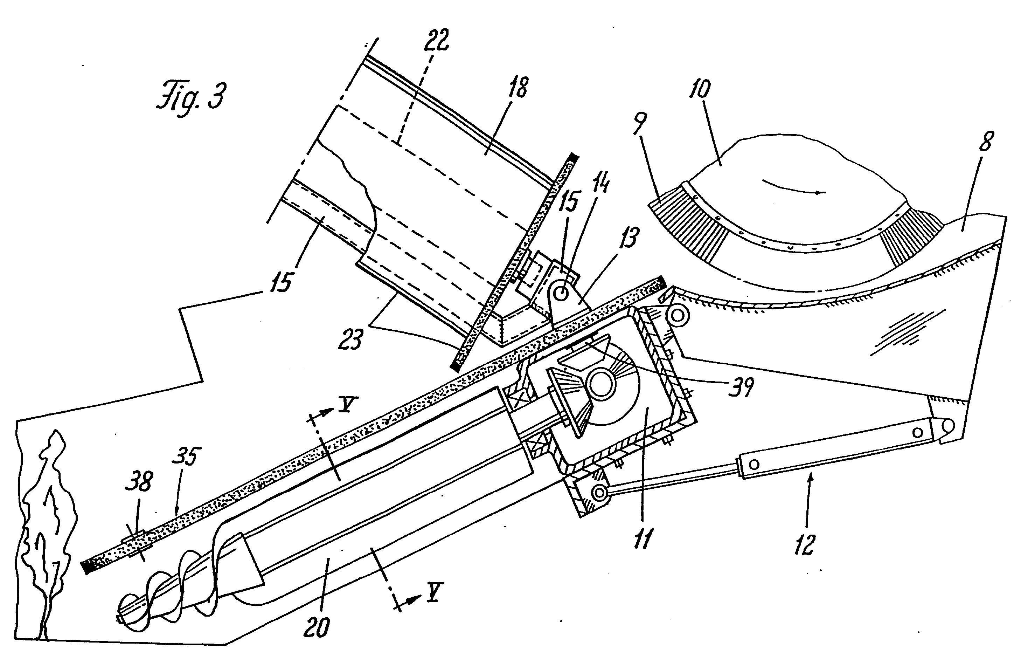

- Fig. 3: eine Teilvergrößerung aus Fig. 2,
- Fig. 4: einen Teil aus Fig. 3 in perspektivischer Darstellung,
- Fig. 5: eine Schnittdarstellung gemäß der Linie VV aus Fig. 3 und
- Fig. 6: eine abgeänderte Form zu der in Fig. 5 dargestellten.

Mit 1 ist ein selbstfahrendes Trägerfahrzeug bezeichnet, mit dem wie in bekannter Weise bei Mähdreschern, ein Schrägförderkanal 2 verschwenkbar verbunden ist. Zu diesem Zweck ist eine Kolbenzylindereinheit 3 vorgesehen, dessen Kolbenstange 4 mit dem Schrägförderkanal 2 und dessen Zylinder 5 mit dem vorderen Teil des Trägerfahrzeugs 1 verbunden ist.
Im Förderkanal 2 sind Einzugsbänder 6 antreibbar gelagert, die mit quer zur Transportrichtung vorgesehenen Borstenreihen 7 bestückt sind. Stirnseitig mit dem Schrägförderer 2 ist über nicht dargestellte Schnellkupplungen eine Sammelmulde 8 verbunden, in welcher eine mit Borsten 9 besetzte Transportschnecke 10 gelagert ist. Mit der dem Schrägförderkanal abgewandten Stirnseite der Sammelmulde 8 sind für jede Reiheneinheit ein Getriebegehäuse 11 schwenkbar verbunden. Zu diesem Zweck stützt sich eine hydraulische Kolbenzylindereinheit 12 zwischen der Sammelmulde 8 und dem Winkelgetriebegehäuse 11 ab. Letzteres weist eine Konsole 13 auf, in der ein um Bolzen 14 verschwenkbarer Rahmen 15 gelagert ist.

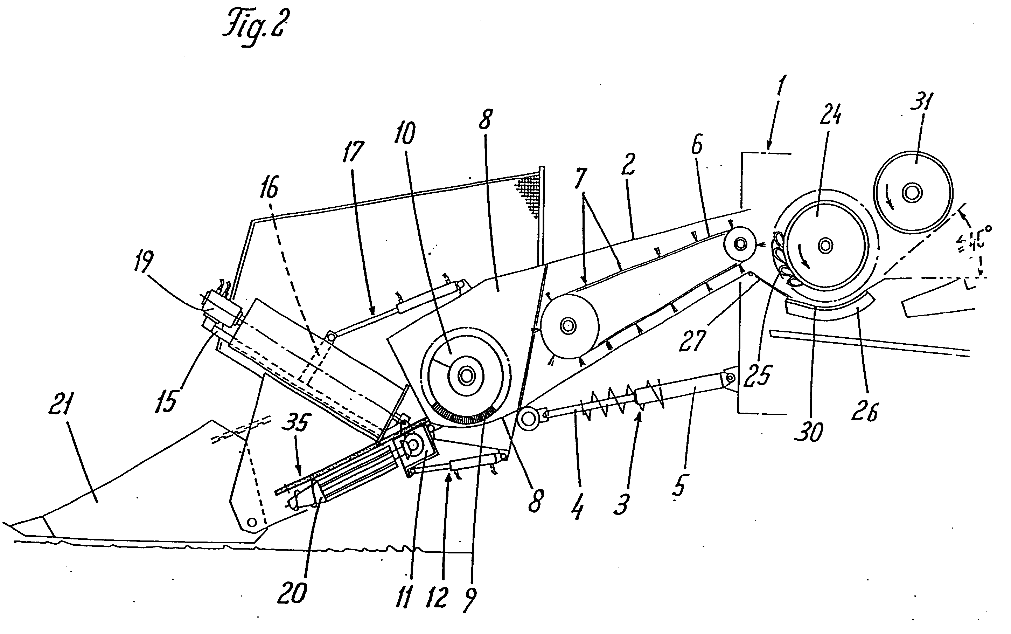

In Fig. 2 ist angedeutet, daß dieser Rahmen 15 über einen Arm 16 mit einer Kolbenzylindereinheit 17 in Verbindung steht, die an der Sammelmulde 8 angelenkt ist. Auf diese Weise ist es möglich, den gesamten Rahmen 15 um die Bolzen 14 zu verschwenken. Der Rahmen 15 selbst dient zur Aufnahme mehrerer Bürstenpaare 18, wobei jede Bürste beispielsweise über einen separaten Ölmotor 19 angetrieben ist. Unterhalb der Bürstenpaare 18 sind Einzugswalzen 20 vorgesehen, die einendig im Getriebegehäuse 11 antreibbar gelagert sind. Den Einzugswalzen 20 sind, wie bei Maiserntemaschinen bekannt, Halmteiler 21 vorgeordnet.

Jeweils einem Bürstenpaar 18 ist ein Einzugswalzenpaar 20 zugeordnet, wobei jede Bürste aus einer Achse 22 besteht, auf die Borsten 23 schneckenwindungsartig aufgesetzt sind. Um ein einwandfreies Abbürsten der Rizinuskapseln von den Stengeln zu erreichen, greifen dabei die Borstenreihen zweier benachbarter Bürsten eines Bürstenpaares 18 ineinander.

Während des Betriebes der zuvor beschriebenen erfindungsgemäßen Vorrichtung werden die Rizinusstengel während der Vorfahrtbewegung des Trägerfahrzeugs 1 von den Einzugswalzen 20 ergriffen und nach unten auf den Acker gezogen, wobei gleichzeitig durch die Bürstenpaare 18 die Kapseln von den Stengeln gebürstet werden. Diese Kapseln werden dann in die Sammelmulde 8 geschleudert und von dort durch die Transportschnecke 10 dem Schrägförderer 2 zugeführt. Dieser transportiert die Rizinuskapseln zu der Dreschtrommel 24, welche vollzylindrisch ausgebildet und an ihrem Umfang mit weichen Schlaglappen 25 besetzt ist. Der der Dreschtrommel 24 zugeordnete Boden 26 ist vollflächig ausgebildet und besteht vorzugsweise aus einem mit Profilen versehenen elastischen Belag 30. Der Zwischenraum zwischen dem Schrägförderkanal 2 und dem Boden 26 ist durch ein glattes Übergabeblech 27 überbrückt, welches zum Boden 26 hin stark geneigt verläuft, um ein sicheres Abgleiten des kleinteiligen Dreschgutes zur Dreschtrommel hin zu gewährleisten. Die in dem aus Boden 26 und Dreschtrommel 24 gebildeten Dreschwerk aus den Kapseln ausgelösten Rizinusbohnen werden dann gemeinsam mit den aufgebrochenen Kapselteilen einer Übergabetrommel 31 an sich bekannten und nicht näher dargestellten Reinigungsorganen übergeben. Um möglichst schonend auf die bruchempfindlichen Bohnen einzuwirken, ist der Mantel der Übergabetrommel 31 vollflächig, kreisrund ausgebildet und besteht ggf. aus elastischem Material.

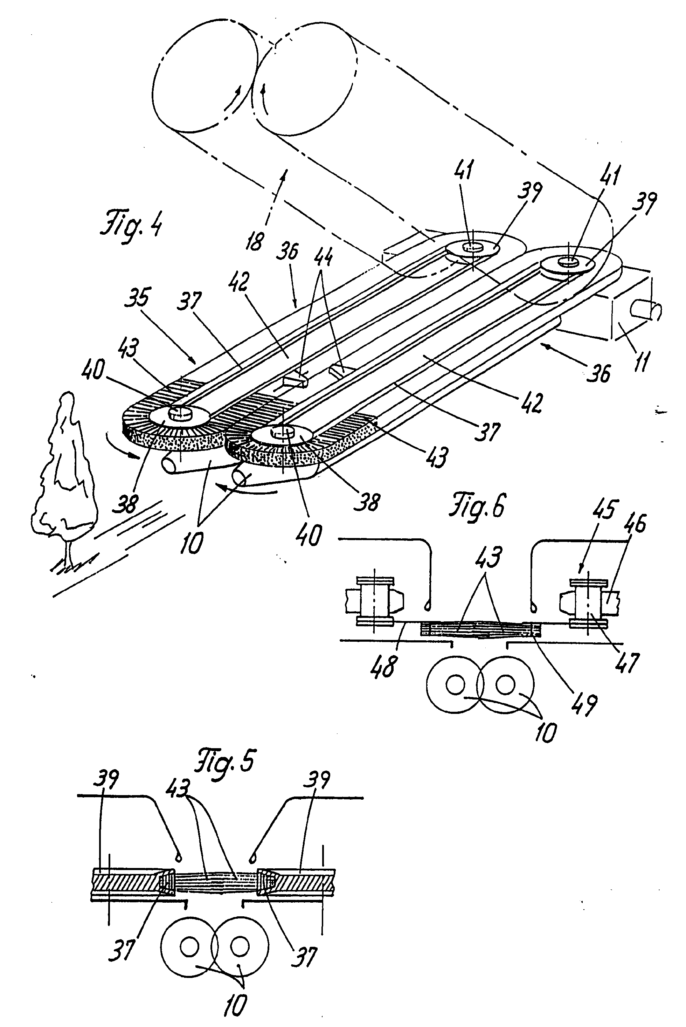

Um nun zu verhindern, daß die Kapseln, die nach dem Erfassen einer Rizinuspflanze durch ein Bürstenpaar bereits abgeschüttelt werden, bevor sie von den Bürsten ergriffen werden können ist oberhalb eines jeden Einzugswalzenpaares 20 ein Bürstenbandpaar 35 vorgesehen, wobei jedes Bürstenband 36 gemäß der Ausführungsform nach Fig. 4 und 5 aus einem Keilriemen 37 besteht, der um Keilriemenscheiben 38 und 39 umläuft, wobei letztere auf Achsen 40 und 41 aufgesetzt sind. Die Achsen 40 und 41 sind in einem Träger 42 drehbar gelagert. Letzterer wird durch die Achse 41 gehalten, die in das Getriebegehäuse 11 hineinragt und angetrieben wird. Die mit dem Keilriemen 37 verbundenen Borsten 43 greifen gemäß Fig. 5 ineinander. Zusätzlich zu den Borsten 43 sind in Abständen zueinander mit den Keilriemen 37 Mitnehmer 44 für die Rizinuspflanze verbunden. Wie die Fig. 4 zeigt, liegt jeweils ein Bürstenbandpaar 35 kurz oberhalb eines Einzugswalzenpaares 10 und deckt deren Abzugsspalt nach oben dichtend ab, so daß die herunterfallenden Kapseln auf das Bürstenbandpaar 35 fallen und von diesem in die Sammelmulde 8 transportiert werden.
Wie die Fig. 6 zeigt, können anstatt Keilriemen 37 auch Ketten 45 verwendet werden, welche um Kettenräder 46 umlaufen. Mit den einzelnen Gliedern 47 dieser Ketten können dann aus Blech bestehende Halter 48 verbunden sein, die u-förmige Aufnahmen 49 für die Borsten 43 aufweisen.

Wenn vorstehend ausgesagt ist, daß die Borsten 43 ineinander greifen, so läßt die Fig. 4 alternativ hierzu erkennen, daß die Borsten im Förderbereich einander lediglich tangieren.

## Patentansprüche

1. Vorrichtung zum Ernten von empfindlichem Erntegut wie Rizinuskapseln mittels Bürsten (18), welche frontseitig an einem selbstfahrenden Trägerfahrzeug antreibbar gelagert und zu mehreren Bürstenpaaren zusammengefaßt sind, wobei jede Bürste eine in Fahrtrichtung neigungsveränderbare Achse aufweist und jedem Bürstenpaar ein die Pflanzenstengel nach unten ziehendes, gegenläufig antreibbares Einzugswalzenpaar (20) zugeordnet ist,
**dadurch gekennzeichnet,**
daß oberhalb eines jeden Einzugswalzenpaares (20) etwa parallel zu deren Längsachse und mit geringem Abstand von diesem ein antreibbares Bürstenbandpaar (35) vorgesehen ist, deren Länge mindestens der Länge des Einzugswalzenpaares (20) entspricht und den Einzugsspalt des Einzugswalzenpaares (20) abdeckt.

2. Vorrichtung nach Anspruch 1,
**dadurch gekennzeichnet,**
daß jedes Bürstenband (36) um zwei senkrecht zur Längsachse der ihr zugehörigen Einzugswalze (20) verlaufende Achsen (40,41) umläuft.

3. Vorrichtung nach den Ansprüchen 1 und 2,
**dadurch gekennzeichnet**,
daß jedes Bürstenband (36) aus einem Endlosförderer besteht, der mit quer von den Achsen (40,41) abweisende Borsten (43) besetzt ist.

4. Vorrichtung nach den Ansprüchen 1 bis 3,
**dadurch gekennzeichnet**,
daß der Endlosförderer eine Kette (45) ist, die um auf die Achsen (40,41) augesetzte Kettenräder (46) umläuft, wobei mit den einzelnen Kettengliedern (47) Halter (48) befestigt sind zur Aufnahme der Borsten.

5. Vorrichtung nach den Ansprüchen 1 bis 4,
**dadurch gekennzeichnet**,
daß die Halter (48) Bleche sind, die u-förmige Aufnahmen (49) für die Borsten (43) aufweisen.

6. Vorrichtung nach den Ansprüchen 1 bis 5,
**dadurch gekennzeichnet**,
daß an den Endlosförderern (45 bzw. 37) im Abstand voneinander Mitnehmer (44) angeordnet sind.

7. Vorrichtung nach den Ansprüchen 1 bis 6,
**dadurch gekennzeichnet**,
daß die Einzugsgeschwindigkeit der Bürstenbandpaare (35) der Einzugsgeschwindigkeit der Einzugswalzen (20) entspricht oder geringfügig höher ist.

8. Vorrichtung nach den Ansprüchen 1 bis 3,
**dadurch gekennzeichnet**,
daß die Endlosförderer Keilriemen (37) sind, die um auf die Achsen(40,41) aufgesetzte Keilriemenscheiben (38,39) umlaufen und die mit Borsten (43) besetzt sind.

9. Vorrichtung nach den Ansprüchen 1 bis 8,
**dadurch gekennzeichnet**,
daß die Borsten (43) der Bänder (37) eines jeden Büstenbandpaares (35) einander im Förderbereich tangieren.

10. Vorrichtung nach den Ansprüchen 1 bis 8,
**dadurch gekennzeichnet**,
daß die Borsten (43) der Bänder (37) eines jeden Bürstenbandpaares (35) im Förderbereich ineinander verlaufen.

## Claims

1. Apparatus for harvesting delicate crops such as castor beans by means of brushes (18) which are drivably mounted at the front end on a self-propelled carrier vehicle and which are combined together to provide a plurality of pairs of brushes, wherein each brush has an axis which is variable in inclination in the direction of travel and associated with each pair of brushes is an oppositely drivable pair (20) of draw-in rollers for pulling the plant stalks downwardly, characterised in that disposed above each pair (20) of draw-in rollers approximately parallel to the longitudinal axis thereof and at a small spacing therefrom is a drivable pair (35) of brush ands whose length corresponds at least to the length of the pair (20) of draw-in rollers and covers the draw-in gap of the pair (20) of draw-in rollers.

2. Apparatus according to claim 1 characterised in that each brush band (36) passes around two axes (40, 41) extending perpendicularly to the longitudinal axis of the draw-in roller (20) associated therewith.

3. Apparatus according to claims 1 and 2 characterised in that each brush band (36) comprises an endless conveyor which is equipped with bristles (43) extending transversely away from the axes (40, 41).

4. Apparatus according to claims 1 to 3 characterised in that the endless conveyor is a chain (45) which passes around chain wheels (46) that are fitted on to the axes (40, 41), wherein holders (48) are fixed to the individual chain links (47), for accommodating the bristles.

5. Apparatus according to claims 1 to 4 characterised in that the holders (48) are metal plates which have U-shaped receiving means (49) for the bristles (43).

6. Apparatus according to claims 1 to 5 characterised in that entrainment members (44) are arranged on the endless conveyors (45 and 37 respectively) at a spacing from each other.

7. Apparatus according to claims 1 to 6 characterised in that the draw-in speed of the pairs (35) of brush bands corresponds to or is slightly higher than the draw-in speed of the draw-in rollers (20).

8. Apparatus according to claims 1 to 3 characterised in that the endless conveyors are V-belts (37) which pass around V-pulleys (38, 39), fitted on to the axes (40, 41) and which are equipped with bristles (43).

9. Apparatus according to claims 1 to 8 characterised in that the bristles (43) of the bands (37) of each pair (35) of brush bands touch each other in the conveyor region.

10. Apparatus according to claims 1 to 8 characterised in that the bristles (43) of the bands (37) of each pair (35) of brush bands pass into each other in the conveyor region.

## Revendications

1. Dispositif pour la récolte de produits délicats tels que des graines de ricin au moyen de brosses (18) qui sont montées de façon entraînable sur le côté avant d'un véhicule porteur automoteur et qui sont rassemblées en plusieurs paires de brosses, chaque brosse comprenant un axe dont l'inclinaison peut être modifiée dans la direction de la marche, et à chaque paire de brosses étant associée une paire de cylindres d'amenée (20) entraînables en sens contraires et tirant les tiges des plantes vers le bas, caractérisé en ce qu'il est prévu au-dessus de chaque paire de cylindres d'amenée (20) et sensiblement parallèlement à leur axe longitudinal, à faible distance de celle-ci, une paire de bandes de brosses entraînables (35), dont la longueur correspond au moins à la longueur de la paire de cylindres d'amenée (20) et qui couvre l'interstice d'introduction de la paire de cylindres d'amenée (20).

2. Dispositif selon la revendication 1, caractérisé en ce que chaque bande de brosses (36) tourne autour de deux axes (40, 41) disposés perpendiculairement à l'axe longitudinal du cylindre d'amenée (20) qui lui est associé.

3. Dispositif selon les revendications 1 et 2, caractérisé en ce que chaque bande de brosses (36) fait partie d'un convoyeur sans fin qui est muni de poils de brosse (43) s'étendant transversalement par rapport aux axes (40, 41).

4. Dispositif selon les revendications 1 à 3, caractérisé en ce que le convoyeur sans fin est une chaîne (45) qui tourne autour de roues à chaîne (46) montées sur les axes (40, 41), des supports (48) étant fixés aux maillons individuels (47) des chaînes pour supporter les poils de brosses.

5. Dispositif selon les revendications 1 à 4, caractérisé en ce que les supports (48) sont constitués par des tôles présentant des logements en forme de U (49) pour les poils de brosses (43).

6. Dispositif selon les revendications 1 à 5, caractérisé en ce que des éléments d'entraînement (44) sont disposés à une certains distance les uns des autres sur les convoyeurs sans fin (45 ou 37).

7. Dispositif selon les revendications 1 à 6, caractérisé en ce que la vitesse d'amenée des paires de bandes de brosses (35) correspond à la vitesse d'amenée des cylindres d'amenée (20), ou est légèrement supérieure.

8. Dispositif selon les revendications 1 à 3, caractérisé en ce que les convoyeurs sans fin sont constitués par des courroies trapézoïdales (37) qui tournent autour de poulies à courroie trapézoïdale (38, 39) montées sur les axes (40, 41), et qui sont équipées de poils de brosse (43).

9. Dispositif selon les revendications 1 à 8, caractérisé en ce que les poils de brosses (43) des bandes (37) de chaque paire de bandes de brosses (35) sont mutuellement tangents dans leur région avant de transport.

10. Dispositif selon les revendications 1 à 8, caractérisé en ce que les poils de brosses (43) des bandes (37) de chaque paire de bandes de brosses (35) se déplacent les uns dans les autres dans leur région de transport.
